# EUROPÄISCHE PATENTSCHRIFT

(11) **EP 1 764 609 B1**
(45) Veröffentlichungstag und Bekanntmachung des Hinweises auf die Patenterteilung: **24.10.2012**
(21) Anmeldenummer: 06012008.6
(22) Anmeldetag: 10.06.2006
(51) Int. Cl.: G01N 21/35, G01N 21/03

(54) **Gasmessgerät**
Gas measuring apparatus
Dispositif de detection de gaz

(30) Priorität: 16.09.2005 DE 102005044479
(43) Veröffentlichungstag der Anmeldung: 21.03.2007
(73) Patentinhaber: Woelke Industrieelektronik GmbH, 45239 Essen (DE)
(72) Erfinder: Baumgärter, Christoph, 47506 Neukirchen-Vlyn (DE)
(74) Vertreter: Nunnenkamp, Jörg

(56) Entgegenhaltungen:
- WO-A-96/01418
- DE-A1- 19 608 604
- US-A- 4 709 150

## Beschreibung

Die Erfindung betrifft ein Gasmessgerät zur Gasanalyse, mit einer im infraroten Wellenlängenbereich arbeitenden Absorptions-Messeinrichtung, welche mit einem Infrarotdetektor und einem Infrarotstrahler ausgerüstet ist, und mit einer zugehörigen Messküvette, wobei die Messküvette oben eine Öffnung aufweist, und über ein diese Öffnung abdeckendes Metallfilter mit einem zu überwachenden Gasgemisch, insbesondere Luftgemisch, kommuniziert, und wobei die Messküvette mit einer ein Spiegelsystem ersetzenden Innenwandung ausgerüstet ist.

Ein derartiges Gasmessgerät ist Gegenstand der WO 96/01418 A1. Hier übernimmt die Messküvette praktisch zugleich die Funktion eines Gehäuses. Das Gehäuse ist mit einer reflektierenden Innenwandung ausgerüstet, weshalb der technologische und apparative Aufwand relativ hoch ist.

Daneben beschreibt die DE 196 08 604 A1 einen Gasanalysator zur kontinuierlichen Bestimmung der Konzentration eines Gases in einem Gasgemisch. Dabei kommt eine Messküvette zum Einsatz, die in Form eines Metallröhrchens ausgebildet sein kann. Die Messküvette weist eine diffus reflektierende Innenfläche auf und ist auf ihrer einem Längsschlitz gegenüberliegenden Seite mit mindestens einer Bohrung zur Fixierung in einem Gehäuse ausgerüstet.

Das zuvor beschriebene Gasmessgerät zur Gasanalyse wird insbesondere in grubengasexplosionsgefährdeten Steinkohlebergwerken eingesetzt, aber nicht ausschließlich.

Die Absorptions-Messeinrichtung arbeitet im infraroten Wellenlängenbereich, d. h. deckt einen Bereich elektromagnetischer Wellen mit einer Wellenlänge von ca. 760 nm bis ca. 1 mm ab. Mit anderen Worten schließt die Empfindlichkeit der Absorptions-Messeinrichtung an das langwellige Ende des sichtbaren Lichtes an und reicht bis zu den Kurzwellen. Dies aus der Erkenntnis heraus, dass die mit solchen Gasmessgeräten zu analysierenden Gase überwiegend in dem genannten Wellenlängenbereich absorbieren.

Das vorerwähnte Gasmessgerät wird hauptsächlich für die physikalische Gasanalyse, insbesondere in grubengasexplosionsgefährdeten Steinkohlebergwerken, eingesetzt. Selbstverständlich können hiermit nicht nur in einem Steinkohlebergwerk auftretende Wetter respektive Luftgemische oder Luft-Gasgemische untersucht werden, sondern grundsätzlich jedwede Gasgemische bzw. Luft-Gasgemische. Dabei wird hauptsächlich der Methangas- oder Kohlendioxidgehalt mit Hilfe der Absorptions-Messeinrichtung erfasst. In diesem Zusammenhang sorgt ein Gassensor der Absorptions-Messeinrichtung in Verbindung mit der Messküvette für die beschriebene Konzentrationsmessung. Zusätzlich gehören zu der Absorptions-Messeinrichtung im Allgemeinen ein Infrarotdetektor für das zu untersuchende Gas und ein vorgeordneter Infrarotstrahler, damit der Infrarotdetektor Gaskonzentrationen oder allgemein Absorptions-Messwerte erfassen kann.

Der Innenraum der Messküvette kommuniziert mit dem zu untersuchenden Gasgemisch bzw. Luft-Gasgemisch, respektive den zu überwachenden Wettern über ein Filter. Außerdem mag ein Transmitter nachgeschaltet sein, also eine elektrische Einheit zur Signalaufbereitung und/oder -übertragung, um die vom Infrarotdetektor erfassten Konzentrationsmesswerte aufzubereiten respektive zu übertragen.

Derartige Gasmessgeräte haben die grundsätzliche Aufgabe, die Konzentration einen oder mehrerer Gaskomponenten in einem Gasgemisch häufig unter rauen Umgebungsbedingungen kontinuierlich zu erfassen und als korrigiertes und linearisiertes elektrisches Ausgangssignal für eine weitere Auswertung oder für weitere vorprogrammierte Aktionen zur Verfügung zu stellen. Insbesondere die untertägigen Wetterströme in Steinkohlebergwerken sind beim Abbau der Kohle durch ausströmendes Grubengas (Methan) belastet. Methangas ist im Konzentrationsbereich von 5 - 1 5 % Volumenprozenten zündfähig, wodurch eine Schlagwetterexplosion durch Funken oder heiße Gegenstände ausgelöst werden kann. Die kontinuierliche Überwachung der Grubenwetter auf ihren Methangehalt mittels stationärer Gasmessgeräte ist deshalb von den Aufsichtsbehörden vorgeschriebenen und für die Sicherheit der untertage tätigen Personen eminent wichtig. Bereits bei einer Methankonzentration von 1 Volumenprozent muss der Abbau im betroffenen Bereich nach den geltenden Bestimmungen eingestellt werden.

Den Gasmessgeräten kommt daher eine besondere Bedeutung zu, weshalb der von Dr. Luft bei der Bergbau-Forschung in Essen entwickelte NDIR-Gasanalysator, Typ UNOR 1, als erstes wirksames und kontinuierlich arbeitendes Messgerät von den Behörden ausgezeichnet wurde. Wegen ihrer Stoßempfindlichkeit wurden diese Infrarot-Gasanalysatoren jedoch bereits wenige Jahre später durch Konzentrationsmessgeräte der Firma Auer GmbH abgelöst, die jeweils mit einem Wärmetönungsdetektor für brennbare Gase bestückt sind. Nachträglich bei den Wärmetönungsmessgeräten ist die Anfälligkeit der Sensoren gegen Vergiftung durch Schwefel-, Halogen- oder Silikonspuren in den Wettern. Solche Sensoren werden aber auch bei Methankonzentrationen oberhalb 5 Volumenprozenten geschädigt, so dass ihre Empfindlichkeit stark reduziert wird. Eine einwandfreie Detektion und Methangas-Konzentrationsmessung ist dadurch in Frage gestellt.

Diese Probleme wurden durch neuartige Methangas-Mess- und -überwachungssysteme vom Typ GAMEX II der Firma Woelke GmbH verringert.

Diese GAMEX II-Systeme arbeiten mit jeweils drei Wärmetönungsdetektoren, wovon sich zwei in kalter Redundanz befinden. Der in Betrieb befindliche Detektor wird täglich automatisch mit Null- und Prüfgas getestet, wobei seine Messsignalhöhe neu justiert wird. Wenn seine Empfindlichkeit auf 50 % seines ursprünglichen Wertes gesunken ist, so schaltet das System automatisch auf einen redundanten Detektor um. Sind alle Wärmetönungsdetektoren verbraucht, wird die Grubenwarte vom System automatisch benachrichtigt. Obwohl die Methanüberwachung mit zusätzlichen redundanten Wärmetönungsdetektoren wesentlich sicherer ist, als bei einem einfachen Methanmessgerät, bleibt doch die Vergiftungsgefahr des Messaufnehmers prinzipiell bestehen, so dass u. U. sehr schnell Messfehler auftreten oder aber die Wärmetönungsdetektoren sehr schnell ausgetauscht werden müssen.

Bei einem Gasmessgerät entsprechend der DE 33 34 264 A1 wird so vorgegangen, dass Infrarotlicht in den Wellenlängenbändern mit einer Wellenlänge von ca. 1,6 µm und 1,3 µm über eine optische Faser zu einer Messzelle übertragen wird, die das zu untersuchende Gasgemisch enthält. Das durch die Messzelle hindurchtretende Licht erfährt entsprechend dem Methangehalt des zu untersuchenden Gasgemisches eine Absorption. Denn Methan verfügt über zwei besonders charakteristische Absorptionsmaxima im Infraroten bei ca. 1,331 µm und bei ca. 1,666 µm. Das aus der Messzelle austretende Licht wird über eine weitere optische Faser aufgenommen und mit einem Lichtstrahl mit einer verschiedenen Bezugswellenlänge hinsichtlich der Intensitätsverhältnisse verglichen. Aus dem Intensitätsverhältnis kann die Methangas-Konzentration in der Messzelle errechnet werden.

Das bekannte Gasmessgerät hat sich grundsätzlich bewährt, ist jedoch anlagentechnisch aufwendig aufgebaut und demzufolge teuer. Hier will die Erfindung insgesamt Abhilfe schaffen.

Der Erfindung liegt das technische Problem zugrunde, ein Gasmessgerät der eingangs beschriebenen Ausführungsform so weiterzuentwickeln, dass dessen Messgenauigkeit bei einfachem Aufbau gesteigert wird. Außerdem sollen negativ wirkende Bestandteile des Grubengases die Messgenauigkeit nicht beeinflussen.

Zur Lösung dieser technischen Problemstellung ist im Rahmen der Erfindung bei einem gattungsgemäßen Gasmessgerät vorgesehen, dass die Messküvette über eine entsprechend geöffnete Fassung in einer Kunststoffeinbettung gelagert ist, wobei die Fassung den Gesamtkörper der Messküvette einhüllt sowie umgibt.

Insgesamt fungiert die in der Regel zwischen Infrarotstrahler und Infrarotdetektor der Absorptions-Messeinrichtung vorgesehene und sich erstreckende Messküvette als gleichsam Kombination aus Gasmesszelle und Lichtleiter. Denn durch die von dem Sintermetallfilter abgedeckte Öffnung übernimmt die Messküvette ganz oder teilweise die Funktion der erforderlichen und mit dem zu untersuchenden Gasgemisch kommunizierenden Messzelle. Außerdem sorgt die Messküvette durch die extrem geringe Rautiefe an ihrer Innenwandung dafür, dass die vom Infrarotstrahler ausgehende Infrarotstrahlung gebündelt und gelenkt wird, so dass ein zusätzliches Spiegelsystem entbehrlich ist. Das vereinfacht den Aufbau wesentlich und sorgt für verringerte Kosten. In diesem Zusammenhang wird die Auslegung größtenteils so gewählt, dass die Innenwandung einen Reflexionsgrad von wenigstens 70 %, vorzugsweise mehr als 80 % und ganz besonders bevorzugt einen solchen von mehr als 90 % aufweist, und zwar in Bezug auf die in Frage stehende Infrarotstrahlung. Das wird meistens durch eine Rautiefe der (metallischen bzw. aus Stahl gefertigten) Innenwandung mit Werten im Bereich von deutlich weniger als 0,1 µm sichergestellt. Üblicherweise werden sogar Werte der Rautiefe von weniger als 0,05 µm eingestellt.

Folglich verfügt ein derart ausgerüstetes Gasmessgerät über einen Sensor respektive Gassensor der Absorptions-Messeinrichtung, der auf die bisher erforderlichen Spiegelsysteme verzichtet und vielmehr deren Funktion der Innenwandung der Messküvette zuordnet. Auf diese Weise kann nun bei der Realisierung der Messküvette mit einem Material gearbeitet werden, dass gegen Vergiftung wie z. B. durch Schwefel-, Halogen- oder Silikonspuren in dem Luft-Gasgemisch bzw. Wetter weitgehend resistent ist, zumindest aber über hohe Standzeiten gegenüber diesen Verunreinigung bzw. Beeinflussungen verfügt. Bei dieser Bauart ist das Gasmessgerät außerdem insgesamt klein und mechanisch stabil ausgebildet.

Die "giftigen" Wetter bzw. das entsprechende Luftgemisch kann direkt und ohne Umwege der Messeinrichtung zugeführt werden, die nämlich gemäß der Erfindung nur durch ein feinporiges Sintermetallfilter von der Umgebungsluft getrennt ist. Dadurch ist eine rasche Gasdiffusion durch das feinporige Sintermetallfilter hindurch möglich, was weitere Verunreinigungen zurückhalten kann. Insgesamt gesehen ist somit ein Gasmessgerät gerade für grubengasexplosionsgefährdeten Steinkohlebergwerke geschaffen worden, das über hohe Standzeiten verfügt und das gegenüber den grubenspezifischen Besonderheiten optimal ausgerüstet ist. Darüber hinaus kann das Messgerät natürlich in allen vergleichbaren Arbeitsbereichen über- und untertage eingesetzt werden.

Nach einer zweckmäßigen Ausbildung der Erfindung ist vorgesehen, dass die Messküvette einer ringförmigen Kunststoffeinbettung zugeordnet und in diese integriert ist. Dadurch wird ein mechanisch hoch stabiles Bauteil geschaffen, das in das Gasmessgerät integriert werden kann und zwar so, dass das zugehörige feinporige Sintermetallfilter und die Messküvette praktisch eine Einheit mit der Kunststoffeinbettung bilden, die an zweckmäßiger Stelle im Gasmessgerät angebracht und angeordnet werden kann.

Es hat sich nun herausgestellt, dass eine besonders günstige und die langen Standzeiten des Messgerätes erbringende Ausführung geschaffen worden ist, wobei die Innenwandung der Messküvette durchgehend eine extrem geringe Rautiefe aufweist. Es wird also nicht mit Teilbereichen in der Messküvette, also mit integrierten Spiegelsystemen gearbeitet, sondern vielmehr wird die Innenwandung der Messküvette insgesamt so ausgebildet, dass damit eine durchgehende Strahlungsbündelung und -lenkung möglich ist. Selbst dann, wenn kleinere Verunreinigungen oder Beeinträchtigungen über die Länge der Innenwandung auftreten sollten, ist dies unerheblich, weil das "lange" System der Strahlungsbündelung und -lenkung dadurch nicht beeinträchtigt wird. Es ergeben sich optimal genaue und damit auch über längere Standzeiten wichtige Identifikationsmöglichkeiten für das Grubengas bzw. dessen Anteil in den Wettern. Die entsprechende Aufbereitung der Innenwandung lässt sich gut verwirklichen, weil die Messküvette ja durchgehend aus dem gleichen Material (Stahl) besteht und dementsprechend genau zu bearbeiten ist.

Die rasche und genaue Gasdiffusion in Richtung auf die Messküvette ist vor allem dadurch gesichert, dass die Messküvette über ihre volle Länge geöffnet ist und dazu mit einem Längsschlitz ausgerüstet ist. Der Längsschlitz verfügt durchgehend über eine Breite, die etwa 1/3 bis 2/3 des Küvettendurchmessers beträgt. Dieser entsprechend bemessene Längsschlitz sowohl bezüglich der Länge wie der Breite sichert eine schnelle und sichere Gasdiffusion in Richtung auf die eigentliche Messküvette.

Um die Messküvette über eine ausreichende Länge verfügen zu lassen und Beschädigungen zu unterbinden, sieht die Erfindung vor, dass die Messküvette von einer entsprechend geöffneten Fassung fixiert ist, die sich in Bohrungen in der Kunststoffeinbettung abstützt. Die eigentliche Messküvette liegt somit in einer entsprechenden Fassung, die aus geeignetem Material besteht und dafür sorgt, dass die Messküvette über ihre gesamte Länge entsprechend abgestützt ist, wobei die Fassung sich selbst in der Kunststoffeinbettung abstützt.

Ein derartiges Gasmessgerät kann auch bei unmittelbarer Zündgefahr eines umgebenden Methan-Luft-Gemisches weiter betrieben werden, weil durch eine spezielle Elektronikschaltung in Verbindung mit dem unmittelbar vor der Messküvette angeordneten Infrarotstrahler der Infrarotstrahler mit geringerer Stromaufnahme und damit mit einer die Zündschutzklasse EEx I ia I erzielend ausgeführt ist. Dies ist, wie weiter vorne beschrieben, besonders wichtig, weil bei Konzentrationsanteilen von 5 - 15 % das Methan-Luft-Gemisch schon bei geringen Wärmequellen bzw. Funken zu einer Explosion großen Ausmaßes führen kann. Dies ist durch die besondere Ausbildung des Infrarotstrahlers und der zugeordneten Elektronikschaltung völlig ausgeschlossen.

Bei den bekannten Gasmessgeräten wird eine Wechsellichterzeugung in der Regel über ein sich drehendes Blendenrad erzeugt. Hierauf wird bei der vorliegenden Erfindung gezielt verzichtet, indem der Infrarotstrahler durch periodische Spannungsimpulse beispielsweise im 2 Hz-Takt ein Wechsellicht erzeugend ausgebildet ist. Der Infrarotstrahler wird also gezielt über solche periodische Spannungsimpulse gespeist, so dass ein entsprechend getaktetes und sicheres Wechsellicht erzeugt werden kann, und zwar auch mit ggf. anderer Frequenz.

Dadurch lässt sich die Messung besonders rauscharm und mit hohem Signal/Rauschverhältnis darstellen, weil die periodischen Spannungsimpulse bzw. das dadurch erzeugte getaktete Wechsellicht ähnlich gestaltet ist, als wenn man eine durchgängig arbeitende Infrarotlichtquelle mit beispielsweise einem mechanischen Zerhacker oder Chopper taktet. Dieses getaktete Infrarotlicht bzw. Wechsellicht wird von dem Infrarotdetektor aufgenommen, welcher als pyroelektrischer Infrarotdetektor ausgebildet sein mag. Der Infrarotdetektor ist unmittelbar in Strahlungsrichtung hinter der Messküvette angeordnet bzw. an einem Ende der Messküvette platziert, während sich der Infrarotstrahler bzw. eine an dieser Stelle vorgesehene LED-Diode oder ein Wärmestrahler am anderen Ende der Messküvette befindet.

In Verbindung mit einem phasenempfindlichen Verstärker bzw. Lockin-Verstärker ist es möglich, dass die vom Infrarotdetektor aufgenommene Ausgangsspannung synchron zur Folgefrequenz des optischen Signals des Infrarotstrahlers selektiv erfasst und verstärkt wird. Das Modulationssignal wird niederfrequent (beispielsweise im angegebenen 2 Hz-Takt) periodisch zu- bzw. weggeschaltet und lässt sich in dem an dem Infrarotdetektor angeschlossenen Lockin-Verstärker zur Kompensation des Dunkelstromes ausnutzen. Außerdem wird hierdurch das Signal/Rauschwerverhältnis enorm gesteigert, weil die fraglichen Messwerte lediglich getaktet erzeugt und ausgewertet werden.

Der pyroelektrische Infrarotdetektor macht von dem bekannten Phänomen der Pyroelektrizität Gebrauch, nach welchem in bestimmten Materialien elektrische Ladungen bei Wärmeeinwirkung erzeugt werden. Bei diesen Materialien kann es sich beispielsweise und nicht einschränkend um Polymermaterial handeln, welches mit Elektroden ausgerüstet ist (vergleiche nur beispielhaft die DE 29 21 298 C2). Als Infrarotstrahler greift die Erfindung meistens auf einen üblichen Wärmestrahler zurück, beispielsweise einen Gasstrumpf, eine Globar-Lampe, eine Nernst-Lampe, eine Wolfram-Lampe oder auch eine Xenon-Lampe, wie sie in der eingangs bereits zugezogenen DE 33 34 264 A1 beschrieben werden.

Ganz besonders bevorzugt ist eine Ausbildung, nach der jeweils zwei Infrarotdetektoren mit zugehörigen optischen Fenstern vorgesehen sind. Bei diesen optischen Fenstern handelt es sich meistens um jeweils unterschiedlich ausgeführte Bandpassfilter, die regelmäßig als Interferenz-Filter ausgebildet sind. Diese Interferenz-Filter können mit ein oder mehreren Folienschichten realisiert werden, um die gewünschte und durchgelassene BandmittenWellenlänge zu definieren.

Dabei ist die Auslegung so getroffen, dass das eine optische Fenster bzw. der eine Bandpassfilter auf die eine oder die mehreren charakteristischen Absorptions-Wellenlängen des Methans im Beispielfall eingestellt ist (Messkanal), während der andere Bandpassfilter auf eine BandmittenWellenlänge eingestellt wird, welche zu keiner charakteristischen Absorptions-Wellenlänge des Methan korrespondiert und auch nicht zu einer charakteristischen Absorptions-Wellenlänge von Wasser H₂O oder Kohlendioxid CO₂ (Referenzkanal). Auf diese Weise lässt sich die geringst mögliche Zahl von Detektoren darstellen und wird so zu einer Verringerung der Baumaße des Gesamtgerätes beigetragen. Die spektrale Absorptionsmethode kann auf diese Art und Weise optimal verwirklicht werden, in dem der Methangehalt im Beispielfall aus dem Signal-Verhältnis des Messkanals zum Referenzkanal ermittelt wird.

Je größer die Absorption des Methan, umso stärker ist das elektrische Signal des Messkanals. Gleichzeitig vergrößert sich das Verhältnis Messkanal/Referenzkanal entsprechend, so dass hieraus auf die Konzentration des Methan im Beispielfall rückgeschlossen werden kann.

Eine weitere zweckmäßige Ausbildung ist die, bei der die Infrarotdetektoren in ein TO-5 Gehäuse eingekapselt sind und dicht an die Bohrung oder gar mit dem Gehäuseansatz in die Bohrung der Kunststoffeinbettung einschiebbar ausgeführt sind. Die Infrarotdetektoren sind also praktisch eine Baueinheit, die damit auch zweckmäßig in das Gesamtgerät integriert werden kann, wobei sie durch die Einkapselung zusätzlich gegen Beschädigung gesichert sind. Das TO-5 Gehäuse befindet sich unmittelbar hinter bzw. an einem Ende der Messküvette.

Die Signalspannungen beider Detektoren werden über Wechselspannungsverstärker verstärkt und anschließend phasenrichtig gleichgerichtet. Diese ermittelten Signalspannungen werden dann zweckmäßig aufbereitet und einem Schreib-Lese-Speicher zugeführt, wobei zweckmäßigerweise dem Sensor bzw. den Infrarotdetektoren ein die gleichgerichteten Signalspannungen und digital aufbereitenden Transmitter nachgeordnet ist. So können die aktuellen Konzentrationswerte kontinuierlich angezeigt und deren Analogwerte zur Fernübertragung in die Grubensicherheitswarte weitergegeben werden. Eine genaue Einhaltung der grubensicherheitlichen Vorschriften ist so gewährleistet.

Die Erfindung zeichnet sich insbesondere dadurch aus, dass ein Gasmessgerät geschaffen ist, das den untertägigen Bedingungen aber auch sonstigen Einsatzbedingungen optimal genügt, weil es sehr klein und mechanisch hoch stabil ausgebildet und mit einem Innenleben versehen ist, das auch bei entsprechenden Grubengasansammlungen bzw. Methangehalten immer sicher arbeitet und die Werte genau ermittelt und weitergeben kann. Die besondere Ausbildung der Messküvette und der zugerodneten Bauteile sichert dabei lange Standzeiten und zwar auch dann, wenn durch Schwefel-, Halogen- oder Silikonspuren in den Wettern und auch ansonsten Beeinträchtigungen der Sensoren zu befürchten wären. Die besondere Bauweise und Ausbildung der Messküvette und der zugeordneten Teile verhindert frühzeitige Beeinträchtigungen und damit die Notwendigkeit, die Bauteile zu warten bzw. auszutauschen. Die Messküvette mit ihrer besonders ausgebildeten Innenwandung mit der extrem geringen Rautiefe ermöglicht stabile und immer genaue Messwerte, so dass ein derartiges Gasmessgerät insbesondere im untertägigen Steinkohlenbergbau für eine erhöhte Sicherheit sorgt.

Aufgrund der Unauffälligkeit und der "Explosionssicherheit" können derartige Gasmessgeräte auch dort eingesetzt werden, wo nur mit wenigen Spezialisten gearbeitet wird oder gearbeitet werden kann, weil das gesamte Messgerät gegen Beschädigungen und auch vor allem gegen Gasbeeinflussungen gesichert einzusetzen ist. Die ermittelten Werte werden der Grubenwarte aufgegeben oder einer sonstigen Leitstelle, die gar nicht im Bergwerk oder Betrieb selbst sich befinden muss, sondern vielmehr an irgend einer zentralen Stelle übertage, wo die Informationen gegebenenfalls auch mehrere Steinkohlenbergwerke oder Betriebe zusammenlaufen und entsprechend aufgewertet werden.

Weitere Einzelheiten und Vorteile der Erfindung ergeben sich aus der nachfolgenden Beschreibung der zugehörigen Zeichnungen, in denen ein bevorzugtes Ausführungsbeispiel mit den dazu notwendigen Einzelheiten und Einzelteilen dargestellt ist. Es zeigen schematisch:
- Fig. 1: eine Explosionszeichnung der zentralen Teile des Gasmessgerätes,

- Fig. 2: einen Schnitt durch eine Messküvette und
- Fig. 3: ein Blockschaltbild bezüglich des Zentralteils des Gasmessgerätes.

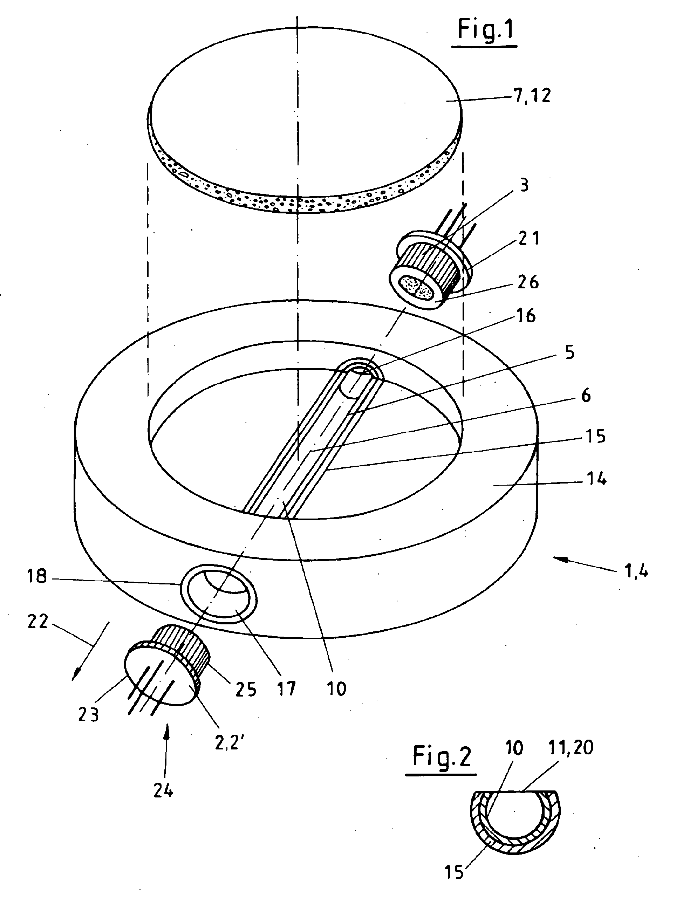

Fig. 1 zeigt ein Gasmessgerät 1, im Ausführungsbeispiel ein Infrarot-Filterphotometer für die Gasanalyse von Gasgemischen, vorliegend Luftgemischen in Steinkohlebergwerken oder ähnlichen Betriebsbereichen. Das fragliche Gasmessgerät 1 verfügt über eine Absorptions-Messeinrichtung 2, 2', 3, 4, welche mit einem Infrarotdetektor 2, 2', einem zugehörigen Infrarotstrahler 3 und einem Gassensor 4 mit vorgeordneter Messküvette 5 ausgerüstet ist. Ein Innenraum 6 der Messküvette 5 ist durch einen Metallfilter 7 abgedeckt, welches eine direkte Ankopplung an die zu überwachende Atmosphäre bzw. das Luftgemisch möglich macht. Eine rasche Gasdiffusion ist hierbei gewährleistet.

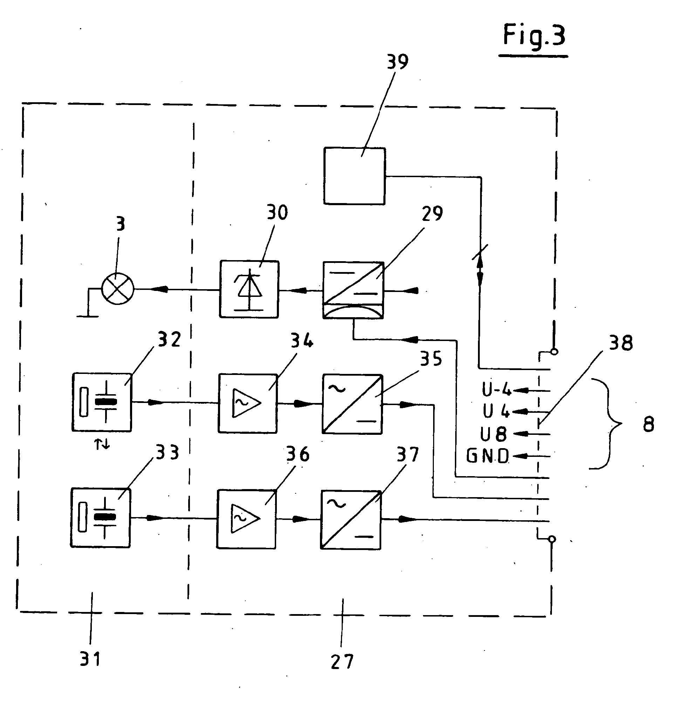

Dem so ausgebildeten Gasmessgerät 1 mit einem Aufbau gemäß Blockschaltbild nach Fig. 3 ist ein im Einzelnen nicht gezeigter Transmitter 8 nachgeordnet. Dieser Transmitter 8 bereitet die gleichgerichteten Signalspannungen des Infrarotdetektors 2, 2' digital auf und sorgt dafür, dass die aktuellen Konzentrationswerte kontinuierlich angezeigt und an die Grubensicherheitszentrale weitergeleitet werden können.

Eine (beispielsweise aus Stahl gefertigte) Innenwandung 10 der Messküvette 5 ist durch eine extrem geringe Rautiefe gekennzeichnet. Aufgrund der extrem geringen Rautiefe der Innenwandung 10 der Messküvette 5 kann bei der gezeigten Ausbildung des Gasmessgerätes 1 auf ein zusätzliches Spiegelsystem zur Strahlungsbündelung und -lenkung der vom Infrarotstrahler 3 emittierten Strahlung verzichtet werden. Die Messküvette 5 weist oben eine Öffnung 11 auf, die entsprechend der Fig. 2 etwa eine Breite besitzt, die einem 1/3 - 2/3 des Durchmessers der Messküvette 5 entspricht. Diese Öffnung 11 ist als Längsschlitz 20 ausgebildet, der sich also vorzugsweise über die gesamte Länge der Messküvette 5 erstreckt.

Der Öffnungsbereich, d. h. die Öffnung 11, ist über ein feinporiges Sintermetallfilter 12 abgedeckt, also ein entsprechend ausgebildetes Metallfilter 7, um eine rasche Gasdiffusion in den Innenraum 6 der Messküvette 5 zu ermöglichen.

Der Körper der Messküvette 5 ist in einer Kunststoffeinbettung 14 gelagert, und zwar über eine entsprechend geöffnete Fassung 15, die den Gesamtkörper der Messküvette 5 einhüllt und umgibt, wie Fig. 2 verdeutlicht. Diese Fassung 15 ist in Bohrungen 16, 17 in der Kunststoffeinbettung 14 eingeführt, so dass sich Lagerteile 18 zur Abstützung der Fassung 15 und damit der Messküvette 5 in der Kunststoffeinbettung 14 ergeben.

In Strahlungsrichtung 22 hinter der kreisförmigen bzw. ringförmigen Kunststoffeinbettung 14 ist der aus zwei Detektoren 2, 2' zusammengesetzte Infrarotdetektor 2, 2' angeordnet, der ein TO-5 Gehäuse 24 aufweist, in dem beide Detektoren 2, 2' eingekapselt sind. Über einen Gehäuseansatz 25 und ein Ringteil 23 ist es möglich, dieses Bauteil bzw. das Gehäuse 24 als solches ganz in der Nähe der ringförmigen Kunststoffeinbettung 14 bzw. der Messküvette 5 anzuordnen oder es sogar über den entsprechend ausgebildeten Gehäuseansatz 25 in die Bohrung 17 einzuschieben. Den gleichen Aufbau weist auch der Infrarotstrahler 3 auf, der über einen Stützring 21 und einen vergleichbaren Gehäuseansatz 26 verfügt und in die Bohrung 16 eingesetzt ist.

Auf Fig. 2 war bereits hingewiesen worden. Hier ist ein Schnitt durch die Messküvette 5 und die Fassung 15 wiedergegeben, wobei deutlich wird, dass die Öffnung 11 eine entsprechend große Weite oder Breite aufweist. Die Innenwandung 10 ist durch die geringe Rautiefe praktisch "spiegelblank".

Fig. 3 zeigt ein Blockschaltbild mit einer Sensorplatine 27 und der Sensorik 31. Diese beiden Bauteile sind so zusammengesteckt, dass sie praktisch eine Einheit bilden. Über Steckverbinder 38 ist eine leichte und sichere Verbindung mit dem hier im Einzelnen nicht dargestellten Transmitter 8 möglich.

Der Gassensor 4 besteht im Aufbau aus der eigentlichen Sensorik 31 und der zugehörigen zweigeteilten Sensorplatine 27. Seine Versorgung erfolgt vom Transmitter 18 aus mit den Spannungen U 8, U 4 und U - 4.

Ein Gleichspannungswandler 29 wird aus dem Transmitter 8 mit 2 Hz getaktet. Er erzeugt dadurch aus der Versorgungsspannung U 8 geregelte Spannungsimpulse im Bereich von 5,0 bis 7,5 V, die auf den Infrarotstrahler 3 geleitet werden. Drei Zenerdioden 30 verhindern ein unzulässiges Ansteigen der Spannung bei irgendwelchen Fehlern.

Die Gasdetektion erfolgt photometrisch durch den Infrarotdetektor 2, 32, dem ein auf die jeweilige Gasart abgestimmtes Interferenzfilter vorgeschaltet ist. Der Wechselspannungsverstärker 34 verstärkt das mit 2 Hz modulierte Detektorsignal, welches von dem Zweiweggleichrichter 35 gleichgerichtet und geglättet wird, bevor es zum Transmitter 8 gelangt (Messkanal).

Eine zweite Infrarotmessstrecke, gebildet aus dem gleichen Infrarotstrahler 3, dem gleichfalls mit einem Interferenzfilter (anderer Bandmittenwellenlänge) versehenen Infrarotdetektor 2, 33, dem Wechselspannungsverstärker 36 und dem Zweiweggleichrichter 37, dient zur Konzentrationsmessung bzw. zum Vergleich mit den Messwerten der zuvor beschriebenen ersten Infrarotmessstrecke in Gestalt des Referenzkanales. Außerdem ermöglicht die zweite Infrarotmessstrecke eine Driftkompensation bei Änderungen der Strahlerintensität. Das Kompensationssignal wird ebenfalls zum Transmitter 8 geleitet.

Alle fühlerspezifischen Informationen des Gassensors 4 sind in einem geschützten Schreib-Lese-Speicher 39 hinterlegt.

## Patentansprüche

1. Gasmessgerät (1) zur Gasanalyse, mit einer im infraroten Wellenlängenbereich arbeitenden Absorptions-Messeinrichtung, welche mit einem Infrarotdetektor (2, 2') und einem Infrarotstrahler (3) ausgerüstet ist, und mit einer zugehörigen Messküvette (5), wobei die Messküvette (5) oben eine Öffnung (11) aufweist, und über ein diese Öffnung abdeckendes Metallfilter (7, 12) mit einem zu überwachenden Gasgemisch, insbesondere Luftgemisch, kommuniziert, und wobei die Messküvette (5) mit einer ein Spiegelsystem ersetzenden Innenwandung (10) ausgerüstet ist,
**dadurch gekennzeichnet, dass**
- die Messküvette (5) über eine entsprechend geöffnete Fassung (15) in einer Kunststoffeinbettung (14) gelagert ist, wobei
- die Fassung (15) den Gesamtkörper der Messküvette (5) einhüllt sowie umgibt.

2. Gasmessgerät (1) nach Anspruch 1, **dadurch gekennzeichnet, dass** die Messküvette (5) eine von einem Sintermetallfilter (12) abgedeckte Öffnung (11) aufweist.

3. Gasmessgerät (1) nach Anspruch 1 oder 2, **dadurch gekennzeichnet, dass** die Messküvette (5) einer ringförmigen Kunststoffeinbettung (14) zugeordnet und in diese integriert ist.

4. Gasmessgerät (1) nach einem der Ansprüche 1 bis 3, **dadurch gekennzeichnet, dass** die Messküvette (5) über ihre volle Länge geöffnet ist und dazu mit einem Längsschlitz (20) ausgerüstet ist, der durchgehend und eine Breite aufweisend geformt ist, die etwa 1/3 bis 2/3 des Küvettendurchmessers beträgt.

5. Gasmessgerät (1) nach einem der Ansprüche 1 bis 4, **dadurch gekennzeichnet, dass** die Messküvette (5) von der entsprechend geöffneten Fassung (15) fixiert ist, die sich in Bohrungen (16, 17) in der Kunststoffeinbettung (14) abstützt.

6. Gasmessgerät (1) nach einem der Ansprüche 1 bis 5, **dadurch gekennzeichnet, dass** ein unmittelbar vor der Messküvette (5) angeordneter Infrarotstrahler (3) eine geringe Stromaufnahme und damit die Zündschutzklasse EEx I ia I erzielend ausgeführt ist.

7. Gasmessgerät (1) nach einem der Ansprüche 1 bis 6, **dadurch gekennzeichnet, dass** der Infrarotstrahler (3) durch periodische Spannungsimpulse beispielsweise im 2 Hz-Takt ein Wechsellicht erzeugend ausgebildet ist.

8. Gasmessgerät (1) nach einem der Ansprüche 1 bis 7, **dadurch gekennzeichnet, dass** ein Infrarotdetektor (2) als pyroelektrischer Infrarotdetektor ausgebildet und unmittelbar in Strahlungsrichtung (22) hinter der Messküvette (5) angeordnet ist.

9. Gasmessgerät (1) nach einem der Ansprüche 1 bis 8, **dadurch gekennzeichnet, dass** sich der Infrarotdetektor (2, 2') aus zwei Detektoren (2, 2') zusammensetzt, die beide in einem TO-5 Gehäuse (24) eingekapselt sind und bis dicht an die Bohrung (17) der Kunststoffeinbettung (14) einschiebbar ausgeführt ist.

## Claims

1. A gas measurement unit (1) for purposes of gas analysis, with an absorption measurement unit operating in the infrared wavelength range, which is equipped with an infrared detector (2, 2') and an infrared radiator (3) and with an associated measuring cuvette (5), wherein
the measuring cuvette (5) has an upper opening (11), and via a metal filter covering this opening communicates with a gas mixture that is to be monitored, in particular an air mixture, and wherein
the measuring cuvette (5) is equipped with an inner wall (10) substituting for a mirror system,
**characterised in that**
- the measuring cuvette (5) is mounted via a correspondingly open holder (15) in plastic embedding (14), wherein
- the holder (15) encases and surrounds the whole body of the measuring cuvette (5).

2. The gas measurement unit (1) in accordance with Claim 1,
**characterised in that**,
the measuring cuvette (5) has an opening (11) covered by a sintered metal filter (12).

3. The gas measurement unit (1) in accordance with Claim 1 or 2,
**characterised in that**,
the measuring cuvette (5) is assigned to annular plastic embedding (14) and is integrated in the latter.

4. The gas measurement unit (1) in accordance with one of the Claims 1 to 3,
**characterised in that**,
the measuring cuvette (5) is open over its full length and for this purpose is equipped with a longitudinal slot (20), which is shaped so as to have a constant width of approximately 1/3 to 2/3 of the cuvette diameter.

5. The gas measurement unit (1) in accordance with one of the Claims 1 to 4,
**characterised in that**,
the measuring cuvette (5) is fixed by the correspondingly open holder (15), which is supported in holes (16, 17) in the plastic embedding (14).

6. The gas measurement unit (1) in accordance with one of the Claims 1 to 5,
**characterised in that**,
an infrared radiator (3) arranged immediately in front of the measuring cuvette (5) has a low current consumption, and is thus embodied to achieve the ignition protection class Eex I ia I.

7. The gas measurement unit (1) in accordance with one of the Claims 1 to 6,
**characterised in that**,
the infrared radiator (3) is designed to generate an alternating light, for example in a 2 Hz cycle, by means of periodic voltage pulses.

8. The gas measurement unit (1) in accordance with one of the Claims 1 to 7,
**characterised in that**,
an infrared detector (2) is designed as a pyroelectric infrared detector, and is arranged directly behind the measuring cuvette (5) in the radiation direction (22).

9. The gas measurement unit (1) in accordance with one of the Claims 1 to 8,
**characterised in that**,
the infrared detector (2, 2') is composed of two detectors (2, 2'), both of which are encapsulated in an HTO-5 housing (24), and is embodied such that it can be pushed tightly onto the hole (17) of the plastic embedding (14).

## Revendications

1. Appareil de mesure de gaz (1) à des fins d'analyse de gaz, comportant un dispositif de mesure par absorption fonctionnant dans la plage des longueurs d'ondes infrarouges, qui est équipé d'un détecteur d'infrarouges (2,2') et d'une source de rayonnement infrarouge (3), et comportant une cuvette de mesure (5) afférente, dans lequel la cuvette de mesure (5) présente au sommet une ouverture (11), et communique par l'intermédiaire d'un filtre métallique recouvrant cette ouverture avec un mélange de gaz à surveiller, notamment un mélange d'air, et dans lequel la cuvette de mesure (5à) est équipée d'une paroi intérieure (10) remplaçant un système de miroir,
**caractérisé en ce que**
- la cuvette de mesure (5) est positionnée par l'intermédiaire d'une monture (15) ouverte correspondante dans un encastrement en plastique (14), dans lequel
- la monture (15) enveloppe et entoure la totalité du corps de la cuvette de mesure (5).

2. Appareil de mesure de gaz (1) selon la revendication 1, **caractérisé en ce que** la cuvette de mesure (5) présente une ouverture (11) couverte par un filtre métallique en aggloméré (12).

3. Appareil de mesure de gaz (1) selon les revendications 1 ou 2, **caractérisé en ce que** la cuvette de mesure (5) est coordonnée à un encastrement en plastique (14) de forme annulaire et intégrée dans celui-ci.

4. Appareil de mesure de gaz (1) selon une des revendications 1 à 3, **caractérisé en ce que** la cuvette de mesure (5) est ouverte sur toute sa longueur et est à cette fin équipée d'une fente longitudinale (20), qui est façonnée de manière traversante et présente une largeur, qui correspond environ à 1/3 à 2/3 du diamètre de la cuvette.

5. Appareil de mesure de gaz (1) selon une des revendications 1 à 4, **caractérisé en ce que** la cuvette de mesure (5) est fixée par la monture ouverte correspondante (15), qui s'appuie dans des alésages (16,17) dans l'encastrement en plastique (14).

6. Appareil de mesure de gaz (1) selon une des revendications 1 à 5, **caractérisé en ce que** une source de rayonnement infrarouge (3) disposée directement avant la cuvette de mesure (5) est conçue de manière à obtenir une consommation de courant réduite et donc la classe de protection contre l'inflammabilité EEx I ia I.

7. Appareil de mesure de gaz (1) selon une des revendications 1 à 6, **caractérisé en ce que** la source de rayonnement infrarouge (3) est conçue de manière à générer une lumière alternée par des impulsions de tension périodiques par exemple à une synchronisation de 2 Hz.

8. Appareil de mesure de gaz (1) selon une des revendications 1 à 7, **caractérisé en ce que** un détecteur d'infrarouges (2) est conçu comme un détecteur d'infrarouges pyroélectrique et est disposé directement dans la direction de rayonnement (22) derrière la cuvette de mesure (5).

9. Appareil de mesure de gaz (1) selon une des revendications 1 à 8, **caractérisé en ce que** la détecteur d'infrarouges (2,2') est composé de deux détecteurs (2,2'), qui sont tous deux encapsulés dans un logement (24) et est conçu de manière à pouvoir être inséré de manière étanche dans l'alésage (17) de l'encastrement en plastique (14).
